Europäisches Patentamt

European Patent Office

Office européen des brevets .

(19)

(11) Publication number: 0 401 885
A1

# (12) EUROPEAN PATENT APPLICATION

(21) Application number: 90201230.1

(22) Date of filing: 15.05.90

(51) Int. Cl.⁵: **B09B 3/00, B27N 3/00, B29C 69/00**

(30) Priority: 09.06.89 IT 6747089

(43) Date of publication of application:
12.12.90 Bulletin 90/50

(84) Designated Contracting States:
AT DE FR GB

(71) Applicant: MASTER S.r.l.
Via Cirié, 49
I-10152 Turin(IT)

(72) Inventor: Bertolino, Giorgio
Via Cirié, 49
I-10152 Turin(IT)

(74) Representative: de Blasio, Francesco,
Dipl.-Ing.
Cabinet SIMONI DE BLASIO Via XX
Settembre, 62
I-10121 Torino(IT)

(54) Process for the reuse of solid waste by means of conglobation in thermoplastic resins.

(57) Process for the reuse of solid waste materials, such as: wood, paper, natural and synthetic fibres, natural or synthetic rubber, tyre carcasses, articles in thermosetting and/or thermoplastic resins, normally thrown away in dumps, said process having the purpose of producing various semifinished and/or finished products for various uses, such as: building, agriculture and other fields, characterised by the fact that said materials are ground and treated with various additives with the addition of thermoplastic resins, all this being mixed and heat processed and moulded into the desired form.

EP 0 401 885 A1

## Process for the Reuse of Solid Waste by means of Conglobation in Thermoplastic Resins

There are known processes for the reuse of waste in order to resolve, even if only partially, the problem of the accumulation of said waste in dumps, said accumulation at the same time giving origin to the causes of pollution - and in order to recycle some materials.

The processes known to date that use waste of any kind and origin, do not always give satisfactory results from the pratical point of view in that, to obtain a finished article having a high degree of mechanical resistance, it is indispensable to resort to particular preparation cycles for the raw material and to the use of various additives which cause the final products to be uneconomic.

The process according to the invention, with the exclusion of scrap iron which anyway represents a minimum percentage of the mass of waste accumulated in public dumps and which, in any case, can be separated from other waste, aims at salvaging and reusing mainly the following material:
- wood, such as cases, boxes used for fruit and vegetables, residue from saw mills, carpenters and the like;
- paper and cardboard in general;
- synthetic, thermoplastic and thermosetting materials which, as is known, are not biodegradable and therefore indestructible;
- synthetic and natural rubber;
- natural and/or synthetic fibres in general.

In order to satisfy the above mentioned purpose, the process according to the invention is substantially characterised by an operating cycle made up of the following phases:
- separation and removal of all the metal objects, such as nails, clips and the like. If worn tyres are present, the beads are removed as these, as is known, are completely reinforced with steel wire;
- grinding of said material in a mill having blades which reduce the solid parts into small fragments, possibly not exceeding 5x5 mm;
- mixing the ground material with a percentage of densified polyethylene, salvaged from film, said percentage being variable according to the predominant use of rubber or of wood;
- addition of a limited percentage of chemical seamer;
- the mixture is put into a turbomixing machine for a period varying, in minutes, from 4' to 8', until a temperature of between 65°C and 80°C is reached;
- the mixture is put into a plastics material extruder provided with a two-way flow screw;
- running temperature - 150°C-170°C;
- double-tapered waving nozzle;
- routing of the plasticized mass, under pressure of about 90 Kg/cm² of specific load, to a compression mould in order to complete impression;
- a cooling phase follows and subsequently the block is extracted from the mould.

Taking into account that a specific aim of the present invention is the manufacture of finished, and/or semifinished, products for the subsequent manufacture of products having the appearance, the physical-mechanical characteristics and the working facility of wood, exclusively using wood waste of any origin, numerous test cycles have been carried out using various mixtures and different moulding procedures.

The results, described below, were achieved on completion of said practical tests. For maximum clarity and concision, the three most significant are described: the first at an initial phase, the second at an intermediate phase and the third at the conclusive phase, with the production of products that can be validly used.

-1- Wood residue originating from waste boxes, cases and boards in general was collected and subsequently put into a grinding mill and ground. 6.00 Kg of ground wood was removed and mixed to 4 Kg of densified polyethylene, salvaged from film. The mixture was passed through a plastics material extruder, provided with a two-way flow screw at a temperature of 160°C, with no filter. The screw blocked due to the friction caused by the ground pieces of wood. It was necessary to raise the running temperature to 190°C. In these conditions the machine worked with difficulty. The counter-pressure on the circular exit nozzle was measured and resulted as being 140 BAR while the extruded material was routed to a compression mould and pressed at 90 Kg/cm² of specific load, in order to complete impression. Following the pressing and cooling phase, parallelepiped sample products were extracted, being 100x200x10 mm in size.

CHARACTERISTICS OF THE PRESSED SAMPLE:

High degree of rigidity, woody appearance; very dark colour caused by the high working temperature and by the strong friction on the screw. Excellent flatness; dimensional contraction, controlled under cold conditions, 0.2%; resistance to breakage on bending, carried out on a sample sized 10x10x100, 7 Kg; lengthening under traction, 2%.

The samples cut into sections by sawing, present small internal spaces and interspaces between the bits of wood. When cutting with the saw, some bits of wood came away. When hammered by a 1 Kg hammer, the samples crumbled.

A stereoscopic examination of the product showed that the bits of wood were conglobated in the resin but had not adhered to it.

The test product obtained in this way was considered as being scarcely usable.

Numerous further tests were carried out during which the components of the mixture and the pressing conditions were varied, until the results deriving from the following test were reached:

-II- 6.00 Kg of ground wood originating from various waste, were treated with 6.00 gr of chemical seamer and put into a turbomixing machine for about 6 minutes until a temperature of about 70°C was reached. 4.00 Kg of densified polyethylene, salvaged from film, and 4.00 gr of external lubricant were added. This was all mixed again for 1 minute. The mixture obtained in this way was passed through a plastics material extruder having a two-way flow screw, with no filter, at a temperature of about 160°C, a double-tapered waving nozzle and counter-pressure of 110 BAR. The extruded material was routed to a compression mould and pressed at 70 Kg/cm². Following the cooling phase, the pressed samples were extracted in the form of parallelepiped products sized 100x200x10 mm.

CHARACTERISTICS OF THE SAMPLES OBTAINED/

Very rigid material; excellent flatness; shrinkage on pressing about 0.25%; resistance to breakage on bending, carried out on samples sized 10x10x100 mm, 12.00 Kg; lengthening under traction 3%; ease and precision when cutting with a saw. The samples resisted to more than 30 hits with a 1 Kg hammer without crumbling, though undergoing visible deformation. A stereoscopic examination revealed permanent contact and adhesion between the bits of wood and the resin, valued at about 60-80% of the surface of the wood. The appearance of the product was very similar to wood. The product could be used, particularly for packaging, rough lining and the like.

-III- 6 Kg of around wood was weighed out and mixed to 15 gr of chemical seamer and put into a thermo- mixing machine for about 8 minutes, until a temperature of 85°C is reached so as to guarantee a total and uniform coating, with seamer, of every piece or bit of wood. 4 Kg of polyethylene, salvaged from film, 6 gr of internal lubricant and 8 gr of liquid wiring, diluted at 50% in glycol, were added, and all this was mixed again for about 2 minutes.

The mixture obtained in this way was put into a plastics material extruder having a two-way flow screw, no filter and a double-tapered waving nozzle, at a temperature of about 150°C. A reduction of about 25% in the cutting stress on the screw was noted. The compression came down to 80 BAR while the material in the plastic state resulted as being very homogenous and smooth. The plastic mixture was put into a compression mould. 50 Kg/cm² of specific pressure were sufficient for completely filling the hollow in the mould and for obtaining parallelepiped samples sized 100x200x10 mm, extracted on completion of the cooling phase.

CHARACTERISTICS OF THE SAMPLES OBTAINED:

Very rigid material; perfect flatness and appearance very similar to wood; shrinkage on pressing, 0.3%; resistance to breakage on bending, controlled on samples sized 10x10x100 mm, 19 Kg. Easily workable with a saw and a plane. When subjected to hammering with a 1 Kg hammer, the samples became deformed, but did not break, resisting to more than 30 hits. A stereoscopic examination demonstrated the total adhesion between the parts in wood and the resin over 100% of the surface of the bits of wood.

The three tests described above represent, as previously noted, a summary of the numerous tests carried out using different materials and processes. Many of the tests carried out gave valid results. The measurement of the additives, chosen for each test, allowed for the development from the unworkable state to the workable state of the mixtures and of the semifinished and pressed products, having physical-mechanical characteristics peculiar to the preponderant waste materials used. Therefore, wood based mixtures supply rigid products that are very similar to wood while, by using mixtures based on rubber, flexible semifinished and finished products can be obtained with characteristics similar to those in rubber.

Obviously, it is indispensable to bear in mind the peculiarity of the physical-mechanical characteristics of the basic waste products when deciding on the semifinished and finished products in relation to the specific use to which they are to be put, adequately varying the components of the corresponding mixtures, pressure and working temperatures.

The manufacture of semifinished and finished products from waste, with characteristics similar to wood, is widely used in many industrial applications, from the building trade to the manufacture of furniture, in general.

The manufacture of semifinished and finished products are also widely used in the field of thermal and acoustic insulation and in the field of internal flooring for industrial premises, particularly for non-skid flooring, all with low production costs.

In each case, the phases of the process include the addition of colouring in order to give the semifinished or finished products the final colour desired.

The invention is not limited to the examples described, the scope of the invention including any other solution and/or variant to the process as long as the purposes of the invention as set out are satisfied.

## Claims

1. Process for the recovery and reuse of solid waste materials, particularly wood, thermoplastic and thermosetting synthetic materials, synthetic and natural rubber, synthetic and/or natural fibres in general, characterised by a working cycle comprising the following phases:
- grinding and crumbling of the materials used, if not already ground;
- addition, to the ground mass, of polyethylene, or another suitable thermoplastic resin, in a percentage varying from 20 to 60%;
- addition of variable quantities of stabilizers, chemical seamers, lubricants and colouring agents;
- mixing of the various materials;
- melting of the mixture in an extruder or by means of another valid system;
- formation of semifinished or finished products, by means of extrusion, intrusion, compression moulding or casting.

2. Process according to Claim 1, characterised by the fact that to obtain products having physical-mechanical characteristics similar to those in wood, the predominant percentage, in the mixture, is made up of ground wood.

3. Process according to Claim 1, characterised by the fact that to obtain semifinished and/or finished products having physical-mechanical characteristics similar to those in rubber, the predominant percentage in the mixture is natural and/or synthetic rubber.

4. Process according to Claim 1 and Claim 2, characterised by the fact that the products obtained with characteristics similar to those in wood can be worked using the saw and the plane.

5. Process according to Claim 1 and Claim 3, characterised by the fact that the semifinished or finished products obtained from mixtures in which the percentage of rubber is predominant present characteristics similar to those in rubber and are therefore waterproof, flexible and easily workable.

| | **DOCUMENTS CONSIDERED TO BE RELEVANT** | | EP 90201230.1 |
|---|---|---|---|
| Category | Citation of document with indication, where appropriate, of relevant passages | Relevant to claim | CLASSIFICATION OF THE APPLICATION (Int Cl⁵) |
| A | US - A - 4 432 666 (FREY et al.) * Claim 1 * -- | 1 | B 09 B 3/00 B 27 N 3/00 B 29 C 69/00 |
| A | GB - A - 2 186 873 (MATERIALS RECYCLING MANAGE-MENT LTD) * Claims 1-4 * -- | 1 | |
| A | CH - A5 - 670 056 (WALTER MÄDER AG) * Claims 1-5 * -- | 1 | |
| A | DE - A1 - 3 832 771 (CATREL S.A.) * Abstract * -- | 1 | |
| A | DE - A1 - 3 728 899 (SAARBERG-FERNWÄRME GMBH) * Abstract * -- | 1 | TECHNICAL FIELDS SEARCHED (Int Cl⁵) |
| A | DE - A1 - 3 523 179 (DUMONT) * Abstract * ---- | 1 | B 09 B 3/00 B 27 N 3/00 B 29 C 69/00 |

The present search report has been drawn up for all claims

| Place of search | Date of completion of the search | Examiner |
|---|---|---|
| VIENNA | 23-07-1990 | BRUS |